# EUROPÄISCHE PATENTSCHRIFT

(11) **EP 2 962 002 B1**
(45) Veröffentlichungstag und Bekanntmachung des Hinweises auf die Patenterteilung: **10.04.2019**
(21) Anmeldenummer: 14714156.8
(22) Anmeldetag: 15.02.2014
(51) Int. Cl.: F16C 1/14, F16C 1/10, E05B 79/20, B60J 9/00, E05B 81/20, E05B 83/36, E05C 1/12

(54) **BOWDENZUG**
BOWDEN CABLE
CÂBLE BOWDEN

(30) Priorität: 26.02.2013 DE 102013203166
(43) Veröffentlichungstag der Anmeldung: 06.01.2016
(73) Patentinhaber: Kiekert Aktiengesellschaft, 42579 Heiligenhaus (DE)
(72) Erfinder: FAITL, Jan, CZ-53501 Prelouc (CZ); RYBAR, Pavel, CZ-53501 Prelouc (CZ)
(86) Internationale Anmeldenummer: PCT/DE2014/000066
(87) Internationale Veröffentlichungsnummer: WO 2014/131389

(56) Entgegenhaltungen:
- WO-A2-2007/120813
- DE-A1- 2 149 278
- FR-A1- 2 589 533

## Beschreibung

Die Erfindung betrifft ein Kraftfahrzeugschloss mit einem Bowdenzug und ferner ein Verfahren zur Montage des Kraftfahrzeugschlosses.

Die Erfindung betrifft ein Kraftfahrzeugschloss gemäß dem Oberbegriff des Anspruchs 1 und ferner ein Verfahren zur Montage des Kraftfahrzeugschlosses.

Ein Bowdenzug umfasst eine Bowdenzugseele und einen Bowdenzugmantel. Die Bowdenzugseele ist zumeist in Form eines Stahldrahts oder Drahtseils ausgeführt. Der Bowdenzugmantel ist in der Regel eine flexible, aber druckfeste Hülle, die als mechanische Führung der Bowdenzugseele und als Gegenlager für die durch die Bowdenzugseele übertragenen Zugkräfte dient. Durch die Flexibilität des Bowdenzugs können Kräfte auch bei einer Biegung des Bowdenzugs übertragen werden. Ein Bowdenzug vermag nicht nur eine Zugkraft durch die Bowdenzugseele, sondern in gleicher Weise eine Druckkraft durch den Bowdenzugmantel zu übertragen.

Ein solcher Bowdenzug wird beispielsweise in Kraftfahrzeugschlössern mit Zuziehhilfe eingesetzt, um eine effektive Übertragung der Kräfte bzw. Längsbewegung eines Stellantriebs auf eine Zuziehklinke einer Zuziehhilfe zu realisieren, welche ein Gesperre von der Position Vorrast in die Position Hauptrast bzw. eine mit dem Gesperre verbundene Fahrzeugtür oder -klappe zwischen einer entsprechenden Vorraststellung und einer entsprechenden Hauptraststellung zu verstellen vermag. Ein solcher Stellantrieb für eine Zuziehhilfe für eine zwischen einer Vorraststellung und einer Hauptraststellung verstellbare Fahrzeugtür oder -klappe ist aus der Druckschrift DE 10 2011 108364 A1 bekannt.

Zur Montage eines Bowdenzugs wird der Bowdenzug verlegt und die Enden der Bowdenzugseele und des Bowdenzugmantels mit den Anschlussteilen verbunden. Der Bowdenzugmantel wird regelmäßig mit dem Gehäuse verbunden und die Bowdenzugseele mit zumeist beweglichen Anschlussteilen.

In der Regel weist der Bowdenzug nach dem Verlegen und Verbinden mit dem Gehäuse und/oder Anschlussteilen ein Spiel auf. Mit Spiel ist hier eine bezogen auf den Soll-Zustand unerwünschte Längendifferenz der Bowdenzugseele und/oder des Bowdenzugmantels oder eine unerwünschte relative Lagedifferenz zwischen Bowdenzugseele und Bowdenzugmantel gemeint.

Ein zu großes positives Spiel würde im späteren Einsatz die Übertragung einer Kraft bzw. Längsbewegung stören. Denn bei Einleitung einer Kraft oder Bewegung in den Bowdenzug würde zunächst nur das positive Spiel reduziert, so dass die Übertragung der Kraft oder Bewegung am anderen Ende erst mit Verzögerung übertragen würde. Aber auch ein negatives Spiel, also eine Verkürzung, beispielsweise bei einer zu kurzen Bowdenzugseele, könnte sich nachteilig auf die spätere Funktion oder Leistungsfähigkeit auswirken. So könnte eine zu kurze Bowdenzugseele dazu führen, dass ein bewegliches Anschlussteil eine vorgesehene Stellung nicht einnehmen kann, sich die Lebensdauer aufgrund zu großer Spannungen verringert oder erhöhter Verschleiß durch Reibung zwischen Bowdenzugmantel und Bowdenzugseele in engen Radien des Bowdenzugs auftritt.

Bei der Montage wird daher grundsätzlich in einem weiteren Arbeitsschritt der Bowdenzug eingestellt, d.h. das Spiel des Bowdenzugs in den Bereich einer zumeist vorgegebenen Montagetoleranz bezogen auf den Soll-Zustand reduziert. Nach dem Einstellen des Bowdenzugs wird die Einstellung des Bowdenzugs, d.h. die Längen und Längenverhältnisse von Bowdenzugmantel und Bowdenzugseele, fixiert.

Insbesondere bei einem Bowdenzug mit einer formschlüssigen Verbindung zu einem Anschlussteil, beispielsweise durch Einhängen eines Hakens oder Nippels, ist das Vorsehen eines Montagespiels zum Erzeugen der Verbindung oder Verbindungen nötig. Ein Montagespiel ist ein vorübergehend nur zum Zwecke der Montage erzeugtes Spiel des Bowdenzugs, ohne welches beispielsweise ein Haken am Ende einer Bowdenzugseele nicht eingehängt werden könnte. Nach erfolgter Montage wird der Bowdenzug wieder eingestellt bzw. gespannt, um das Montagespiel zu beseitigen.

Die Spannrichtung eines Bowdenzugs ist die Richtung, in welche die Längen und/oder relative Lage von Bowdenzugmantel und/oder Bowdenzugseele verändert werden müssen, um ein positives Spiel zu reduzieren.

Zum Einstellen und/oder Fixieren eines Bowdenzugs bei der Montage sind üblicherweise eine Gewindeverbindung oder eine Klemmverbindung vorgesehen, durch welche die Länge des Bowdenzugmantels oder der Bowdenzugseele eingestellt und/oder fixiert werden können.

Bei einer Gewindeverbindung, beispielsweise zum Verbinden eines Bowdenzugmantels mit dem Gehäuse, sorgt die Gewindesteigung für eine Längenänderung bei jeder Umdrehung und die Selbsthemmung des Gewindes für die Fixierung.

Bei einer Klemmverbindung, beispielsweise zum Verbinden einer Bowdenzugseele mit einem Anschlussteil, wird die gewünschte Länge der Bowdenzugseele eingestellt und mittels Verklemmen mit dem Anschlussteil fixiert.

In der Druckschrift DE 10110516 A1 wird ein durch einen Bowdenzug gebildeten Verbindungsmechanismus zur Koppelung eines Türschlosses mit einem Innenverriegelungsknopf offenbart. In einer Halterung 31 sind zwei parallel verlaufende Abschnitte 76, 77 eines Bowdenzugrohres 7 befestigt. Die Halterung 31 kann zum Einstellen der Längsposition in einem Führungs- bzw. Trägerelement 32 in Längsrichtung verschoben werden. Für die Fixierung der Halterung 31 sorgen symmetrisch geformte Rastzähne 36 und ein Rasthaken 37.

DE 2 149 278 A beschreibt eine Vorrichtung zur Längenverstellbarkeit einer Bowdenzughülle, bestehend aus einem gestellfesten Endfitting, das eine Axialbohrung zur Aufnahme des mit einer Außengewindeverzahnung versehenen Hüllenendes aufweist, und einem Verstellteil, das in einer senkrecht zur Hüllenachse verlaufenden Ausnehmung des Endfittings gelagert, mit einer Innengewindeverzahnung versehen ist und eine Axialverschiebung des Hüllenendes relativ zum Endfitting einerseits durch Eingriff der beiden Gewindeverzahnungen verhindert und andererseits, bei Betätigung des Verstellgliedes, ermöglicht. Das Verstellteil ist senkrecht zur Hüllenachse zwischen zwei Endstellungen verschiebbar gelagert. Die Gewindeverzahnungen des Verstellteils und des Hüllenendes stehen in der ersten Endstellung außer Eingriff und in der zweiten Endstellung in Eingriff miteinander. Diese bekannte Vorrichtung umfasst Einstellmittel mit Sperrmitteln, die in einen Eingriff mit der Hülle zum Festlegen ihrer Längsbewegung bringbar sind, und unabhängige Vorspannmittel zum Drücken der Sperrmittel in einen Eingriff mit der Hülle.

Es ist Aufgabe der Erfindung, das Einstellen und Fixieren eines Bowdenzugs bei der Montage einfach zu gestalten.

Zur Lösung dieser Aufgabe schlägt die Erfindung die Gegenstände der unabhängigen Ansprüche vor.

Zur Lösung der Aufgabe dient ein Bowdenzug mit einer Feststelleinrichtung, die so beschaffen ist, dass der Bowdenzug durch eine Translationsbewegung eingestellt und fixiert werden kann oder die Fixierung der durch die Translationsbewegung erzeugte Einstellung des Bowdenzugs durch ein Umformen mindestens einer Umformzunge, insbesondere ein plastisches Umformen, vorzugsweise unter Verwendung eines Werkzeugs, erfolgen kann. Mit Translationsbewegung ist eine Bewegung entlang einer Geraden gemeint, welche parallel zur Spannrichtung im Bereich der Feststelleinrichtung verläuft. Durch das Vorsehen der erfindungsgemäßen Feststelleinrichtung wird eine besonders einfache, schnelle und spiellose Montage oder zumindest praktisch spiellose Montage ermöglicht. Ferner kann ein Bowdenzug mit erfindungsgemäßer Feststelleinrichtung mit besonders geringem Aufwand hergestellt werden. Ein solcher Bowdenzug kann mit besonders wenigen Teilen realisiert werden.

Erfindungsgemäß weist der Bowdenzugmantel im Bereich der Feststelleinrichtung eine oder mehrere Anschlusseinrichtungen, vorzugsweise Ausnehmung, zum Anschließen eines Werkzeugs zum Einstellen des Bowdenzugs. Durch die mindestens eine Anschlusseinrichtung kann der Bowdenzug mithilfe eines entsprechenden Werkzeugs manuell oder maschinell eingestellt oder gespannt werden. Eine besonders einfache Montage wird so ermöglicht.

In einer Ausführungsform des Bowdenzugs mit Feststelleinrichtung, die so beschaffen ist, dass der Bowdenzug durch eine Translationsbewegung eingestellt und fixiert werden kann, erfolgt das Einstellen und Fixieren des Bowdenzugs nur durch eine einzige Translationsbewegung in Spannrichtung,

Durch einen Bowdenzug mit Feststelleinrichtung, welche nur eine einzige Translationsbewegung in Spannrichtung benötigt, um den Bowdenzug einzustellen und die am Ende der Translationsbewegung vorliegende Einstellung des Bowdenzugs automatisch zu fixieren, wird eine besonders einfache Montage ermöglicht.

In einer Ausführungsform des Bowdenzugs mit Feststelleinrichtung, die nur durch eine Translationsbewegung in Spannrichtung eingestellt und fixiert werden kann, sind mindestens ein Rastzahn und/oder mindestens ein Rasthaken zum Fixieren der Einstellung des Bowdenzugs vorgesehen. Durch den oder die Rastzähne und/oder einen oder mehreren Rasthaken wird ermöglicht, dass der Benutzer eine translatorische Bewegung zum Einstellen des Bowdenzugs durchführen kann und die translatorische Position, also die Einstellung des Bowdenzugs, nach Durchführung der Translationsbewegung automatisch fixiert ist. Dies bewirkt eine einfache und schnelle Montage.

In einer Ausführungsform ist ein Rastprofil zum Verrasten des Rastzahns und/oder eine Führung zum Halten des Rasthakens und Führen in Translationsrichtung in ein Anschlussteil, vorzugsweise Gehäuse, eingebracht. Durch das Einbringen bzw. Ausformen des Rastprofils und/oder der Führung in das Anschlussteil kann ein Bowdenzug mit besonders wenigen Teilen realisiert werden.

In einer Ausführungsform ist die Führung zum Halten und Führen des Rasthakens in Form eines Vorsprungs oder einer Nut oder eines Schlitzes vorgesehen. Die Ausgestaltung der Führung durch einen Vorsprung, eine Nut oder einen Schlitz ermöglicht eine besonders einfache Realisierung der Führung mit geringem Herstellungsaufwand.

In einer Ausführungsform sind der Rastzahn und/oder das Rastprofil sägezahnförmig ausgestaltet und zwar insbesondere derart, dass eine Translationsbewegung nur in Spannrichtung möglich ist. Eine Sägezahnform ist insbesondere im Wesentlichen dreieckförmig, wobei ein Gleitschenkel eine flache Steigung zum Ermöglichen einer Gleitbewegung und ein Rastschenkel eine steile Steigung zur Vermeidung einer Gleitbewegung bzw. zum Verrasten einer entsprechenden Gegengeometrie aufweist. Durch das Aneinanderreihen mehrerer Sägezahnformen entsteht ein Sägezahnprofil.

Sind die Rastschenkel des Rastprofils in Spannrichtung und/oder der Rastschenkel des Rastzahns entgegen der Spannrichtung orientiert, so ist eine Translationsbewegung nur in Spannrichtung möglich. In der entgegengesetzten Richtung sorgen der oder die Rastschenkel für ein Verrasten. Ein sägezahnförmig geformter Rastzahn und/oder geformtes Rastprofil können somit bewirken, dass der Benutzer durch nur eine Translationsbewegung in Spannrichtung den Bowdenzug einstellen kann und diese Einstellung automatisch fixiert bleibt.

In vielen Systemen mit Bowdenzug reicht die Kraft des Benutzers bei der Montage nicht aus, um das positive Spiel des Bowdenzugs manuell auf Null zu reduzieren. Die Montagetoleranz liegt dann häufig in einem Bereich, der bei handfestem Spannen eingehalten werden kann. Insbesondere bei solchen Systemen ermöglicht der erfindungsgemäße Bowdenzug eine besonders einfache und schnelle Montage, weil lediglich eine Translationsbewegung mit Handkraft des Benutzers genügt, um den Bowdenzug einzustellen und gleichzeitig zu fixieren.

In einer Ausführungsform des Bowdenzugs mit Feststelleinrichtung, die durch eine Translationsbewegung eingestellt und fixiert werden kann, umfasst die Feststelleinrichtung ein Feststellmittel, insbesondere nur ein Feststellmittel, welches vorzugsweise einstückig ausgeführt ist. Einstückig bedeutet aus demselben Material durch einen Urformprozess hergestellt, beispielsweise durch ein Spritzgussprozess. Mithilfe einer Feststelleinrichtung mit einem oder nur einem insbesondere einstückigen Feststellmittel kann ein Bowdenzug mit besonders wenigen Teilen realisiert und mit besonders geringem Aufwand hergestellt werden.

In einer Ausführungsform des Bowdenzugs kann das Feststellmittel senkrecht zur Spannrichtung lösbar angebracht werden. Durch ein senkrecht zur Spannrichtung lösbar anbringbares Feststellmittels wird ermöglicht, dass der Bowdenzug zunächst frei eingestellt und dann die Einstellung durch Anbringen des Feststellmittels fixiert werden kann. Ein großes Montagespiel kann so besonders einfach bereitgestellt und wieder beseitigt werden. Ebenso ermöglicht ein solches Feststellmittel, dass eine durch nur eine Translationsbewegung erzeugte Einstellung und Fixierung durch ein Lösen des Feststellmittels senkrecht zur Spannrichtung die Einstellung des Bowdenzugs in beide Richtungen korrigiert und durch erneutes Anbringen des Feststellmittels fixiert werden kann. Eine besonders einfache und flexible Montage wird so ermöglicht.

In einer Ausführungsform ist das Feststellmittel in Translationsrichtung formschlüssig mit der Bowdenzugseele oder dem Bowdenzugmantel verbunden, insbesondere durch eine Arretiernase und eine entsprechende Arretieröffnung. Vorzugsweise sind die Arretiernase an der Bowdenzugseele oder am Bowdenzugmantel und/oder die Arretieröffnung an dem Feststellmittel angeordnet. Durch das Vorsehen einer solchen formschlüssigen Verbindung wird eine besonders einfache und flexible Montage ermöglicht.

In einer Ausführungsform reicht die Arretiernase durch ein Langloch im Rastprofil und/oder Anschlussteil mit Längserstreckung in Spannrichtung hindurch, um jenseits des Langloches das Feststellmittel in Translationsrichtung formschlüssig mit der Bowdenzugseele oder dem Bowdenzugmantel zu verbinden. Für ein Systeme mit Bowdenzug, bei dem nur eine begrenzte Zugangsmöglichkeit zur Feststelleinrichtung des Bowdenzugs vorliegt, kann durch ein solches Langloch das Feststellmittel so angeordnet werden, dass der Bowdenzug trotz der begrenzten Zugangsmöglichkeiten durch den Benutzer eingestellt und fixiert werden kann. Eine besonders einfache Montage kann so ermöglicht werden.

In einer Ausführungsform sind der oder die Rastzähne und/oder der oder die Rasthaken am Feststellmittel angeordnet. Durch diese Rastzahn- und/oder Rasthaken-Anordnung am Feststellmittel wird eine besonders einfache und flexible Montage ermöglicht.

In einer Ausführungsform weist der Rasthaken in Anbringungsrichtung eine Phase auf und/oder vermag sich elastisch zu verformen. Durch einen solchen elastischen Rasthaken mit Phase wird ein besonders einfaches Anbringen des Rasthakens an die Führung ermöglicht.

In einer Ausführungsform ist das Feststellmittel nur durch eine senkrechte Bewegung zur Spannrichtung lösbar. Hierdurch wird eine besonders zuverlässige Fixierung bewirkt.

In einer Ausführungsform ist das Feststellmittel nach dem Anbringen unlösbar, also nur zerstörend lösbar, mit der Feststelleinrichtung verbunden. Eine unlösbare Feststellmittelverbindung kann eine besonders feste Fixierung bewirken.

In einer Ausführungsform weist die Bowdenzugseele im Bereich der Feststelleinrichtung eine oder mehrere Anschlusseinrichtungen, vorzugsweise Ausnehmung, zum Anschließen eines Werkzeugs zum Einstellen des Bowdenzugs. Durch die mindestens eine Anschlusseinrichtung kann der Bowdenzug mithilfe eines entsprechenden Werkzeugs manuell oder maschinell eingestellt oder gespannt werden. Eine besonders einfache Montage wird so ermöglicht.

In einer Ausführungsform des Bowdenzug mit Feststelleinrichtung, die so beschaffen ist, dass eine Einstellung durch ein Umformen mindestens einer Umformzunge fixiert werden kann, ist eine für die Montage von der Bowdenzugseele oder dem Bowdenzugmantel getrennte Verbindungseinrichtung zum Verbinden mit einem Anschlussteil vorgesehen.

Durch das Vorsehen einer für die Montage getrennten Verbindungseinrichtung kann der Bowdenzug und die Verbindungseinrichtung separat verlegt und somit die Montage besonders einfach durchgeführt werden. Der Bowdenzug, also ein Ende der Bowdenzugseele oder des Bowdenzugmantels, wird anschließend mit der Verbindungseinrichtung durch das Umformen der Umformzungen in eingestellter Position fixiert. Insbesondere bei formschlüssigen Verbindungen, welche andernfalls zum Verbinden ein übermäßig großes Montagespiel oder einen erheblich großen Montageaufwand bedürfen würden, bewirkt ein solches getrenntes Verlegen und Verbinden der Verbindungseinrichtung eine besonders große Vereinfachung des Montageprozesses.

In einer Ausführungsform weist die Verbindungseinrichtung eine Ausnehmung mit Radius der zu verbindenden Bowdenzugseele oder des Bowdenzugmantels auf. Eine solche Ausnehmung wirkt zum einen als Führung beim Einstellen und sorgt somit für eine besonders einfache Montage. Zum anderen wird durch eine solche Ausnehmung die Verbindungsfestigkeit erhöht.

In einer Ausführungsform weist die Verbindungseinrichtung im Bereich der Ausnehmung ein Sichtfenster auf oder ist als Halbschale ausgeführt. Durch das Sichtfenster bzw. durch die Ausführung als Halbschale im Bereich der Ausnehmung kann bei der Montage die Lage der Bowdenzugseele oder des Bodenzugmantels relativ zur Verbindungseinrichtung festgestellt werden und somit eine besonders einfache Einstellung und Montage ermöglicht werden.

In einer Ausführungsform ist die mindestens eine Umformzunge an der Verbindungseinrichtung angeordnet und vorzugsweise einstückig mit der Verbindungseinrichtung ausgeführt. Durch die Anordnung der mindestens einen Umformzuge an der Verbindungseinrichtung kann die Feststelleinrichtung mit besonders geringem Herstellungsaufwand realisiert werden.

In einer Ausführungsform sind die eine oder mehreren Umformzungen tangential an der Ausnehmung angeordnet, vorzugsweise bei mehreren Umformzungen parallel ausgerichtet. Durch eine tangentiale Anordnung einer oder mehrerer Umformzungen kann eine besonders hohe Verbindungsfestigkeit zur Bowdenzugseele oder dem Bowdenzugmantel erzielt werden.

In einer Ausführungsform sind mehrere Umformzungen an beiden Seiten der Ausnehmung versetzt angeordnet. Durch eine versetzte Anordnung mehrerer Umformzungen an beiden Seiten der Ausnehmung kann eine besonders hohe Verbindungsfestigkeit zur Bowdenzugseele oder dem Bowdenzugmantel erzielt werden. Ferner ermöglicht dies eine Herstellung der Verbindungseinrichtung mit besonders geringem Aufwand und Verschnitt.

In einer Ausführungsform ist auf der gegenüberliegenden Seite einer Umformzunge eine Aufnahme zur Verankerung der Umformzunge nach der Umformung vorgesehen. Durch eine solche Ausnehmung kann eine besonders hohe Verbindungsfestigkeit zur Bowdenzugseele oder dem Bowdenzugmantel erzielt werden.

In einer Ausführungsform ist die mindestens eine Umformzunge nach dem Umformen unlösbar verbunden. Durch die unlösbare Verbindung kann eine besonders hohe Fixierungsfestigkeit bewirkt werden.

Zur Lösung der Aufgabe ist ferner ein Verfahren zur Montage des erfindungsgemäßen Kraftfahrzeugschlosses mit den folgenden Montageschritten vorgesehen:
1. Verlegen des Bowdenzugs in Bezug zu dem ersten Anschlussteil in Spannrichtung.
2. Einstellen und Fixieren des Bowdenzugs relativ zu dem ersten Anschlussteil dadurch, dass eine einzige Translationsbewegung ausgeführt wird.

Durch ein Verfahren, welches das Einstellen und Fixieren des Bowdenzugs nur durch eine einzige Translationsbewegung erlaubt, wird eine besonders einfache und schnelle Montage ermöglicht.

In einer Ausführungsform sieht das Verfahren einen zusätzlichen Montageschritt zum Anbringen eines Feststellmittels vor Montageschritt zwei vor. Durch das Anbringen des Feststellmittels wird eine besonders einfache und flexible Montage ermöglicht.

In einer Ausführungsform sieht das Verfahren im Anschluss an Schritt zwei für den Bedarfsfall einer Korrektur der Einstellung einen zusätzlichen Montageschritt zum Lösen des Feststellmittels, erneuten Einstellen des Bowdenzugs und erneutem Anbringen des Feststellmittels vor. Durch die mit geringem Aufwand verbundene Heilbarkeit von Benutzerfehlern bei der Einstellung und Fixierung des Bowdenzugs wird eine besonders einfache und flexible Montage ermöglicht.

Ein alternatives Verfahren zur Montage des Bowdenzugs mit Feststelleinrichtung sieht folgende Montageschritte vor:
1. Verlegen des Bowdenzugs.
2. Einstellen des Bowdenzugs.
3. Fixieren des Bowdenzugs durch Anbringen eines Feststellmittels oder Umformen von Umformzungen, insbesondere unter Verwendung eines Umformwerkzeugs.

Durch ein Verfahren, welches das Fixieren des Bowdenzugs durch Anbringen eines Feststellmittels oder Umformen von Umformzungen erlaubt, kann ein besonders großes Montagespiel bereitgestellt und eine besonders einfache und schnelle Montage ermöglicht werden.

In einer Ausführungsform sieht das Verfahren in Montageschritt 1 das separate Verlegen des Bowdenzugs sowie einer für die Montage getrennten Verbindungseinrichtung vor. Ein besonders einfaches Verlegen des Bowdenzugs und der Verbindungseinrichtung kann so erzielt werden.

Die Erfindung wird anhand der in den Figuren 1 bis 12 abgebildeten Ausführungsbeispiele I (Fig. 1 bis 5), II (Fig. 6 bis 9) und III (Fig. 10 bis 12) näher erläutert. Es zeigen:

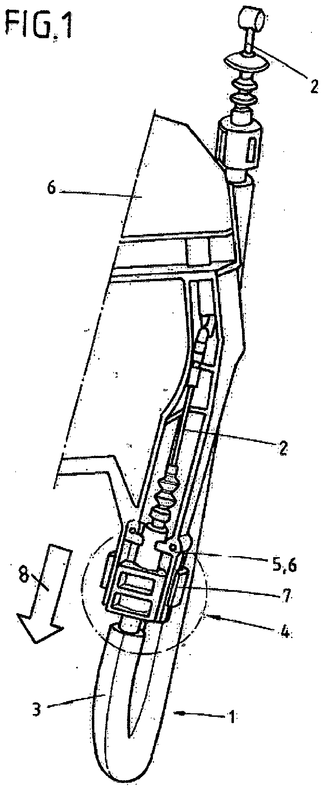

Figur 1: Ausschnitt eines Systems mit Bowdenzug.

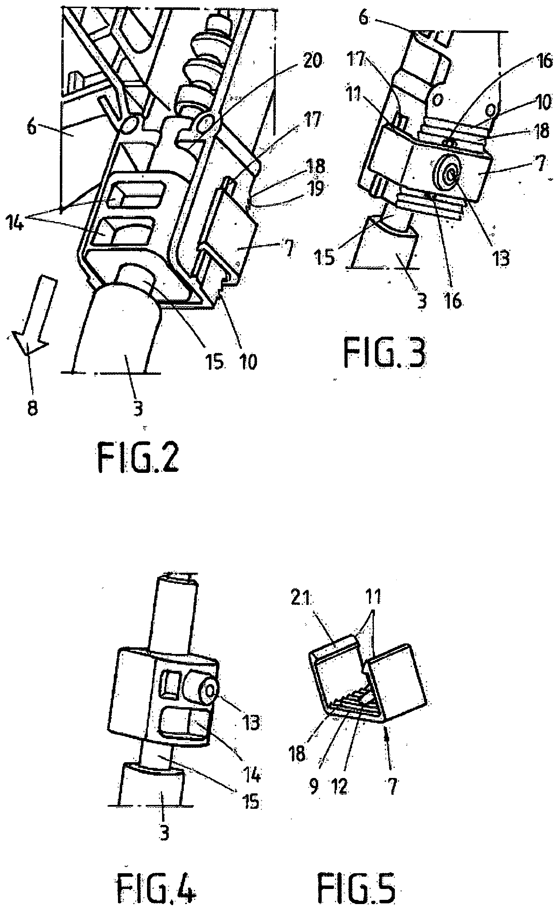

Figur 2: Feststelleinrichtung mit Feststellmittel (vorne).
Figur 3: Feststelleinrichtung mit Feststellmittel (hinten).
Figur 4: Bowdenzugmantel.
Figur 5: Feststellmittel.

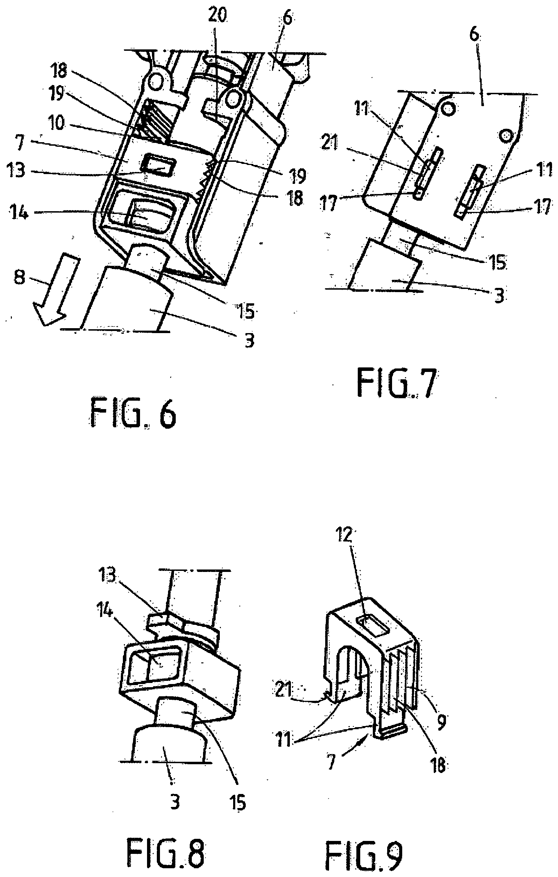

Figur 6: Feststelleinrichtung mit Feststellmittel (vorne).
Figur 7: Feststelleinrichtung mit Feststellmittel (hinten).
Figur 8: Bowdenzugmantel.
Figur 9: Feststellmittel.

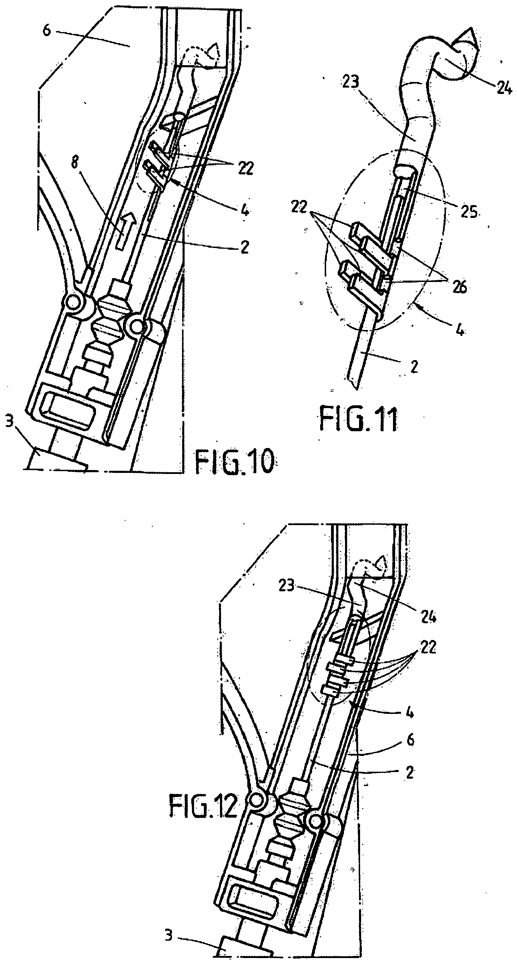

Figur 10: Feststelleinrichtung vor Fixierung.
Figur 11: Feststelleinrichtung vor Fixierung (Detailansicht).
Figur 12: Feststelleinrichtung nach Fixierung.

Die Figur 1 zeigt einen Ausschnitt eines Systems mit einem Bowdenzugs 1 (Ausführungsbeispiel I) mit Feststelleinrichtung 4, wobei der Bowdenzug 1 dazu eingesetzt wird, bei einem Kraftfahrzeugschloss einer Tür oder Klappe mit einem Gesperre umfassend eine Drehfalle und wenigstens einer Sperrklinke für ein Verrasten der Drehfalle in einer Position Hauptrast und in einer Position Vorrast eine Kraft bzw. Längsbewegung von einem Antrieb auf eine Zuziehklinke einer Zuziehhilfe zum Bewegen der Drehfalle von der Position Vorrast in die Position Hauptrast zu übertragen.

In Figur 1 ist nur zu einer Seite des Bowdenzugs 1 die Verbindung zu Anschlussteilen 5 dargestellt. Zur anderen Seite sind die Verbindungen und Anschlussteile ausgeblendet. Figur 1 zeigt somit einen Bowdenzug 1, bei dem nur ein Ende der Bowdenzugseele 2 mit einem Anschlussteil 5 (in Figur 1 durch das Gehäuse 6 verdeckt) verbunden und nur ein Ende des Bowdenzugmantels 3 mit dem Gehäuse 6 als Anschlussteil verbunden sind.

Der in Figur 1 gezeigte Bowdenzug 1 (Ausführungsbeispiel I) umfasst eine Feststelleinrichtung 4, bei der ein Feststellmittel 7 senkrecht von hinten zur Spannrichtung 8 angebracht werden kann. Die Figuren 2, 3, 4 und 5 zeigen Details dieses Ausführungsbeispiels I. Die Figuren 6, 7, 8 und 9 zeigen Detaildarstellungen des Ausführungsbeispiels II eines Bowdenzugs 1 mit Feststelleinrichtung 4, bei der das Feststellmittel 7 durch den Benutzer senkrecht von vorne zur Spannrichtung 8 angebracht werden kann. Je nach Zugangsmöglichkeit, Bauraum und gewähltem Montageverfahren kann das Ausführungsbeispiel I oder II vorteilhaft für eine besonders einfache Montage sein.

Das Feststellmittel 7 ist einstückig als Kunststoff-Spritzgussteil ausgeführt und weist sägezahnförmige Rastzähne 9, zwei Rasthaken 11 und eine Arretieröffnung 12 auf (siehe Fig. 5 und 9).

Der Bowdenzugmantel 3 weist im Bereich der Feststelleinrichtung 4 eine Arretiernase 13 zum in Spannrichtung 8 bzw. Translationsrichtung formschlüssigen verbinden mit der Arretieröffnung 12, eine Anschlusseinrichtung 14 in Form einer Ausnehmung zum Anschließen eines Werkzeugs zum manuell oder maschinell Einstellen des Bowdenzugs 1 sowie einen Freistich 15 am Bowdenzugmantel zur Vergrößerung der Flexibilität des Bowdenzugs am Übergang zum Bereich der Feststelleinrichtung 4 auf (siehe Fig. 4 und 8).

Das Gehäuse 6 weist im Bereich der Feststelleinrichtung 4 neben einer zylindrischen Öffnung 20 zum besonders einfachen Verlegen des Bowdenzugs eine Führung 17 zum Halten des Rasthakens 11 und Führen in Translationsrichtung auf. Im Ausführungsbeispiel I ist diese Führung 17 als Vorsprung mit Phase im Gehäuse 6 ausgeformt (siehe Fig. 3). Im Ausführungsbeispiel II ist diese Führung 17 als Nut bzw. Schlitz im Gehäuse 6 ausgeformt (siehe Fig. 7). In das Gehäuse 6 ist ferner ein Rastprofil 10 eingebracht bzw. ausgeformt, welches den Rastzähnen 9 des Feststellmittels 7 im angebrachten Zustand zugewandt ist (siehe Fig. 2, 3 und 6).

Die Rastzähne 9 und das Rastprofil 10 sind sägezahnförmig geformt und weisen Gleitschenkel 18 mit flacher Steigung und Rastschenkel 19 mit steiler Steigung aufweist. Die Gleitschenke 18 und Rastschenkel 19 der Rastzähne 9 und des Rastprofils 10 sind so beschaffen, dass bei einer Translationsbewegung des Feststellmittels 7 in Spannrichtung 8 ein Gleiten ermöglicht wird und entgegen der Spannrichtung 8 die Rastzähne 9 mit dem Rastprofil 10 verrasten. Die durch die Führung 17 gehaltenen Rasthaken 11 sorgen für eine zuverlässige Fixierung des Feststellmittels 7 in einer solchen verrasteten Position. Dem Benutzer wird es so ermöglicht, durch eine einzige Translationsbewegung des Bowdenzugmantels in Spannrichtung den Bowdenzug einzustellen und gleichzeitig zu fixieren.

Der Rasthaken 11 weist eine Phase 21 auf, wodurch der Rasthaken 11 besonders einfach in die Führung 17 eingerastet werden kann. Das Kunststoffmaterial des Rasthakens 11 ist so gewählt, dass eine elastische Verformung des Rasthakens 11 ermöglicht werden kann, welche es erlaubt, den Rasthakens 11 zerstörungsfrei und wiederholbar an die Führung 17 anzubringen und auch wieder zu lösen.

Hieraus ergeben sich mehrere Möglichkeiten der Montage des Bowdenzugs 1 bzw. des Einstellens und Fixierens des Bowdenzugs 1 durch die Feststelleinrichtung 4:
Der Bowdenzug 1 umfassend die Bowdenzugseele 2 und den Bowdenzugmantel 3 wird zunächst verlegt. Bezogen auf den in Figur 1 dargestellten Ausschnitt mit verbundenen Enden des Bowdenzugs 1 bedeutet dies das Einfügen des Bowdenzugmantels 3 mit innenliegender Bowdenzugseele 2 in die zylindrische Öffnung 20 des Gehäuses 6 und Verbinden der Bowdenzugseele 2 mit dem Anschlussteil, welches in Figur 1 durch das Gehäuse 6 verdeckt wird.

Als nächstes kann der Bowdenzug 1 entweder durch Anbringen des Feststellmittels 7 und einer einzigen Translationsbewegung des Bowdenzugmantels 3 in Spannrichtung 8 eingestellt und fixiert werden, oder der Bowdenzug wird erst durch eine Translationsbewegung eingestellt und anschließend durch Anbringen des Feststellmittels 7 fixiert. Bei der letzteren Variante ist eine Translationsbewegung in beide Richtungen entlang einer Geraden parallel zur Spannrichtung möglich.

Bei Bedarf ist eine Korrektur der Einstellung in beiden oben beschriebenen Montageverfahren möglich. Und zwar durch ein Lösen des Feststellmittels 7, ein erneutes Einstellen des Bowdenzugs 1 durch eine Translationsbewegung und schließlich durch ein erneutes Anbringen des Feststellmittels 7.

Die Figur 10 zeigt einen Bowdenzug 1 (Ausführungsbeispiel III) mit Feststelleinrichtung 4, welche vier Umformzungen 22 zum Fixieren der Einstellung des Bowdenzugs 1 aufweist. In den Figuren 10 und 11 ist der Bowdenzug 1 im nicht-fixierten Zustand und in der Figur 12 im fixierten Zustand mit umgebogenen Umformzungen 22 dargestellt.

Bowdenzugs 1 umfasst eine für die Montage von der Bowdenzugseele 2 getrennte Verbindungseinrichtung 23 mit einem geschwungenen, hakenförmigen Ende 24, welches in Figur 11 nur zum Teil gezeigt ist.

Durch die für die Montage getrennte Ausführung der Verbindungseinrichtung 23 und der Bowdenzugseele 2 können die Bowdenzugseele 2 sowie das Ende 24 unabhängig voneinander und dadurch besonders einfach verlegt werden.

Nach dem Verlegen und Verbinden der Enden wird die Bowdenzugseele 2 im Bereich der Feststelleinrichtung 4 in eine Ausnehmung 25 gelegt, welche den im Wesentlich gleichen Radius der zu verbindenden Bowdenzugseele 2 aufweist. So kann die Bowdenzugseele 2 für ein Einstellen besonders einfach translatorisch bewegt bzw. in Spannrichtung gespannt werden. Die Verbindungseinrichtung 23 ist im Bereich der Ausnehmung 25 als eine Halbschale als Sichtfenster zur Anzeige der Relativposition der Bowdenzugseele 2 zur Verbindungseinrichtung 23 bzw. zum Ende 24 ausgeführt. Dies ermöglicht ein besonders einfaches Einstellen durch den Benutzer.

Die Umformzungen 22 sind in der Verbindungseinrichtung 23 einstückig eingebracht bzw. ausgeformt, und zwar tangential zur Ausnehmung 25, parallel zueinander und an beiden Seiten der Ausnehmung 25 versetzt (siehe Figur 11). Die Verbindungseinrichtung 23 ist aus Metall hergestellt. Durch eine solche Anordnung der Umformzungen 22 kann die Bowdenzugseele 2 besonders einfach in die Verbindungseinrichtung 23 eingelegt und später mit besonders großer Festigkeit durch die Anpresskraft der plastisch umgeformten bzw. umgebogenen Umformzungen 22 verbunden werden.

Die Aufnahme 26 der Verbindungseinrichtung 23 zum Verankern der Umformzungen 22 nach dem Umformen vermag eine Translationsbewegung der Umformzungen 22 nach dem Umformen zu vermeiden und ermöglicht durch eine größere Flächenauflage eine besonders hohe Verbundfestigkeit zwischen der Verbindungseinrichtung 23 und der Bowdenzugseele 2.

Durch den Bowdenzug 1 des Ausführungsbeispiels III wird ebenfalls eines der oben beschriebenen Verfahren zum Einstellen und Fixieren des Bowdenzugs 1 durch die Feststelleinrichtung 4 ermöglicht:
Der Bowdenzug 1 umfassend die Bowdenzugseele 2 nebst getrennter Verbindungseinrichtung 23 und dem Bowdenzugmantel 3 wird zunächst verlegt.

Als nächstes kann der Bowdenzug 1 durch eine Translationsbewegung eingestellt und anschließend durch ein Umformen der Umformzungen 22 des Feststellmittels 7 fixiert werden, wobei eine Translationsbewegung in beide Richtungen entlang einer Geraden parallel zur Spannrichtung möglich ist.

## Patentansprüche

1. Kraftfahrzeugschloss umfassend
- ein Gesperre umfassend eine Drehfalle und wenigstens einer Sperrklinke für ein Verrasten der Drehfalle in einer Position Hauptrast und in einer Position Vorrast,
- vorzugsweise eine Zuziehhilfe für ein Bewegen der Drehfalle von der Position Vorrast in die Position Hauptrast,
- einen Bowdenzug (1) umfassend eine Bowdenzugseele (2) und einen Bowdenzugmantel (3),
- ein Anschlussteil (6), das mit einem Ende des Bowdenzugmantels (3) verbunden ist,
- eine Feststelleinrichtung (4), die so beschaffen ist, dass der Bowdenzug (1) dadurch relativ zu dem Anschlussteil (6) in Spannrichtung (8) eingestellt und fixiert werden kann, dass eine Translationsbewegung des Bowdenzugmantels (3) relativ zu dem Anschlussteil (6) ausgeführt wird, **dadurch gekennzeichnet, dass**
- der Bowdenzugmantel (3) im Bereich der Feststelleinrichtung (4) wenigstens eine Anschlusseinrichtung (14), vorzugsweise in Form einer Ausnehmung, zum Anschließen eines Werkzeugs zum Einstellen des Bowdenzugs (1) aufweist.

2. Kraftfahrzeugschloss nach dem vorhergehenden Anspruch, wobei
- die Feststelleinrichtung (4) mindestens einen Rastzahn (9) zum Fixieren der Einstellung des Bowdenzugs (1) aufweist,
- ein Rastprofil (10) zum Verrasten des Rastzahns (9) in das Anschlussteil (5) eingebracht ist.

3. Kraftfahrzeugschloss nach einem der vorhergehenden Ansprüche, wobei
- die Feststelleinrichtung (4) mindestens einen Rasthaken (11) zum Fixieren der Einstellung des Bowdenzugs (1) aufweist,
- eine Führung (17) zum Halten des Rasthakens (11) und Führen in Translationsrichtung in das Anschlussteil (5) eingebracht ist.

4. Kraftfahrzeugschloss nach Anspruch 2, wobei
- der Rastzahn (9) und/oder das Rastprofil (10) sägezahnförmig ausgestaltet sind, und zwar derart, dass eine Translationsbewegung nur in Spannrichtung (8) möglich ist.

5. Kraftfahrzeugschloss nach einem der vorigen Ansprüche, wobei
- die Feststelleinrichtung (4) ein Feststellmittel (7) umfasst, insbesondere nur ein Feststellmittel (7), welches vorzugsweise einstückig ausgeführt ist,
- das Feststellmittel (7) senkrecht zur Spannrichtung (8) lösbar angebracht werden kann, und zwar insbesondere in Translationsrichtung formschlüssig mit der Bowdenzugseele (2) oder dem Bowdenzugmantel (3), vorzugsweise durch eine Arretiernase (13) nebst entsprechender Arretieröffnung (12).

6. Kraftfahrzeugschloss nach dem vorigen Anspruch und einem der Ansprüche 2 bis 4, wobei
- der mindestens eine Rastzahn (9) und/oder der mindestens eine Rasthaken (11) am Feststellmittel (7) angeordnet sind.

7. Kraftfahrzeugschloss nach einem der vorigen Ansprüche, wobei
- die Feststelleinrichtung (4) eine Verbindungseinrichtung (23) zum Verbinden mit einem Anschlussteil umfasst, die für die Montage von der Bowdenzugseele (2) oder dem Bowdenzugmantel (3) getrennt werden kann.

8. Kraftfahrzeugschloss nach dem vorhergehenden Anspruch, wobei
- die Verbindungseinrichtung (23) eine Ausnehmung (25) mit einem Radius entsprechend dem zu verbindenden Teil der Bowdenzugseele (2) oder des Bowdenzugmantels (3) und/oder ein Sichtfenster umfasst.

9. Verfahren zur Montage eines Kraftfahrzeugschlosses, das gemäß einem der Ansprüche 1 bis 8 ausgebildet ist, wobei
- in einem ersten Schritt der Bowdenzug (1) in Bezug zu dem Anschlussteil (6) verlegt wird und
- in einem zweiten Schritt der Bowdenzug (1) dadurch relativ zu dem Anschlussteil (6) in Spannrichtung (8) eingestellt, insbesondere gespannt, und fixiert wird, dass eine einzige Translationsbewegung ausgeführt wird.

10. Verfahren nach dem vorhergehenden Anspruch, wobei
- das Kraftfahrzeugschloss gemäß Anspruch 5 oder 6 ausgebildet ist,
- vor dem zweiten Schritt ein zusätzlicher Montageschritt zum Anbringen des Feststellmittels (7) ausgeführt wird.

11. Verfahren nach einem der zwei vorhergehenden Ansprüche, wobei
- nach dem zweiten Schritt eine Korrektur der Einstellung vorgenommen werden kann, und zwar durch die zusätzlichen Montageschritte
• Lösen des Feststellmittels,
• erneutes Einstellen des Bowdenzugs und
• erneutes Anbringen des Feststellmittels.

## Claims

1. Motor vehicle lock comprising
- a locking mechanism consisting of a rotary latch and at least one pawl for locking the rotary latch in a main ratchet position and in a pre-ratchet position,
- preferably a closure aid for moving the rotary latch from the pre-ratchet position to the main ratchet position,
- a Bowden cable (1) consisting of a Bowden pull cable (2) and a Bowden cable sheath (3),
- a connecting part (6) which is connected to one end of the Bowden cable sheath (3),
- a locking device (4), which is such that the Bowden cable (1) can be adjusted and fixed relative to the connecting part (6) in the clamping direction (8),
that a translational movement of the Bowden cable sheath (3) is carried out relative to the connecting part (6),
**characterized in that**
- the Bowden cable sheath (3) features in the region of the locking device (4) at least one connection device (14), preferably in the form of a recess, for connecting a tool for adjusting the Bowden cable (1).

2. Motor vehicle lock according to the preceding claim, wherein
- the locking device (4) has at least one ratchet tooth (9) for fixing the adjustment of the Bowden cable (1),
- a latching profile (10) for latching the ratchet tooth (9) installed in the connection part (5).

3. Motor vehicle lock according to one of the preceding claims, wherein
- the locking device (4) has at least one ratchet hook (11) for fixing the adjustment of the Bowden cable (1),
- a guide (17) for holding the ratchet hook (11) and guiding in translation direction attached to the connection part (5).

4. Motor vehicle lock according to claim 2, wherein
- the ratchet tooth (9) and / or the ratchet profile (10) are configured in the shape of a sawtooth, in such a way that a translatory movement is possible only in the clamping direction (8).

5. Motor vehicle lock according to one of the preceding claims, wherein
- the locking device (4) comprises a locking means (7), in particular only a locking means (7), which is preferably made in one piece,
- the locking means (7) perpendicular to the clamping direction (8) can be releasably attached, in particular positively in the translation direction with the Bowden pull cable (2) or the Bowden cable sheath (3), preferably by a locking lug (13) together with corresponding locking opening (12).

6. Motor vehicle lock according to the preceding claim and one of claims 2 to 4, wherein
- at least one ratchet tooth (9) and / or at least one ratchet hook (11) are arranged on the locking means (7).

7. Motor vehicle lock according to one of the preceding claims, wherein
- the locking device (4) comprises a connecting device (23) for connection to a connection part, which can be separated for the assembly of the Bowden pull cable (2) or the Bowden cable sheath (3).

8. Motor vehicle lock according to the preceding claim, wherein
- the connecting means (23) comprises a recess (25) having a radius corresponding to the Bowden pull cable (2) part to be connected or the Bowden cable sheath (3) and / or a viewing window.

9. A method of assembling a motor vehicle lock designed according to any one of claims 1 to 8, wherein
- in a first step, the Bowden cable (1) in relation to the connecting part (6) is placed and
- in a second step, this sets the Bowden cable (1) relative to the connecting part (6) in the clamping direction (8), and especially tensions and fixes it so that a single translational movement is carried out.

10. A method according to the preceding claim, wherein
- the motor vehicle lock is designed according to claim 5 or 6,
- an additional assembly step for attaching the locking means (7) is carried out before the second step.

11. Method according to one of the two preceding claims, wherein
- after the second step, a correction of the setting can be made, namely through the additional assembly steps
• releasing the locking means,
• readjusting the Bowden cable and
• reapplying the fixing means.

## Revendications

1. Serrure de véhicule à moteur, comprenant
- un mécanisme de verrouillage comprenant un pêne tournant et au moins un cliquet de verrouillage pour que le pêne tournant encrante dans une position de crantage principal et une position de précrantage,
- de préférence un accessoire de traction de fermeture pour déplacer le pêne tournant de la position de précrantage vers la position de crantage principal,
- un câble Bowden (1) comprenant une âme (2) de câble Bowden et une gaine (3) de câble Bowden,
- une pièce de raccordement (6) qui est reliée à une extrémité de la gaine (3) du câble Bowden,
- un dispositif d'immobilisation (4) constitué de sorte que le câble Bowden (1) puisse être ajusté et immobilisé relativement à la pièce de raccordement (6) dans le sens de tensionnement (8),
de sorte qu'un mouvement de translation de la gaine (3) du câble Bowden soit exécuté relativement à la pièce de raccordement (6),
**caractérisé en ce que**
- la gaine (3) du câble Bowden présente, dans la zone du dispositif d'immobilisation (4), au moins un dispositif de raccordement (14) ayant de préférence la forme d'un évidement pour raccorder un outil servant à régler le câble Bowden (1).

2. Serrure de véhicule à moteur selon la revendication précédente, sachant que
- le dispositif d'immobilisation (4) présente au moins une dent de crantage (9) servant à immobiliser le câble Bowden (1) sur son réglage,
- un profilé de crantage (10) servant à faire encranter la dent de crantage (9) a été introduit dans la pièce de raccordement (5).

3. Serrure de véhicule à moteur selon l'une des revendications précédentes,
- sachant que le dispositif d'immobilisation (4) présente au moins un crochet de crantage (11) servant à immobiliser le câble Bowden (1) sur son réglage,
- sachant qu'un guidage (17) servant à retenir le crochet de crantage (11) et à guider dans le sens de translation a été introduit dans la pièce de raccordement (5).

4. Serrure de véhicule à moteur selon la revendication 2, sachant que
- la dent de crantage (9) et/ou le profilé de crantage (10) sont configurés en dent de scie de telle sorte qu'un mouvement de translation n'est possible que dans le sens de tensionnement (8).

5. Serrure de véhicule à moteur selon l'une des revendications précédentes, sachant que
- le dispositif d'immobilisation (4) comprend un moyen d'immobilisation (7), en particulier seulement un moyen d'immobilisation (7) réalisé de préférence monobloc,
- le dispositif d'immobilisation (7) peut être fixé détachable verticalement par rapport au sens de tensionnement (8), à savoir notamment dans le sens de la translation, par adhérence des formes avec l'âme (2) du câble Bowden ou la gaine (3) du câble Bowden, de préférence au moyen d'un nez de retenue (13) et d'un orifice de retenue (12) correspondant.

6. Serrure de véhicule à moteur selon la revendication précédente et l'une des revendications 2 à 4, sachant que
- au moins une dent de crantage (9) et/ou au moins un crochet de crantage (11) sont disposé contre le moyen d'immobilisation (7).

7. Serrure de véhicule à moteur selon l'une des revendications précédentes, sachant que
- le dispositif d'immobilisation (4) comprend un dispositif de liaison (23) servant à relier avec une pièce de raccordement, pièce qui pour le montage peut être détachée de l'âme (2) du câble Bowden ou de la gaine (3) du câble Bowden.

8. Serrure de véhicule à moteur selon la revendication précédente, sachant que
- le dispositif de liaison (23) comprend un évidement (25) dont le rayon correspond à la partie à relier de l'âme (2) du câble Bowden ou de la gaine (3) du câble Bowden, et/ou une fenêtre de regard.

9. Procédé de montage d'une serrure de véhicule à moteur configuré conformément à l'une des revendications 1 à 8, sachant que
- au cours d'une première étape le câble Bowden (1) est posé relativement à la pièce de raccordement (6) et au cours d'une deuxième étape le câble Bowden (1) est de la sorte réglé, par rapport à la pièce de raccordement (6), dans le sens de tensionnement (8), en particulier tendu et immobilisé de sorte qu'un mouvement unique de translation est exécuté,

10. Procédé selon la revendication précédente, sachant que
- la serrure de véhicule à moteur est configurée conformément à la revendication 5 ou 6,
- avant la deuxième étape une opération de montage supplémentaire est exécutée pour fixer le moyen d'immobilisation (7).

11. Procédé selon l'une des deux revendications précédentes, sachant que
- après la deuxième étape une correction du réglage peut être effectuée, à savoir au moyen des étapes de montage supplémentaires suivantes :
• détachement du moyen d'immobilisation,
• nouveau réglable du câble Bowden et
• nouvelle fixation du moyen d'immobilisation.
